# EUROPEAN PATENT SPECIFICATION

(11) **EP 0 975 561 B1**
(45) Date of publication and mention of the grant of the patent: **26.08.2009**
(21) Application number: 98917337.2
(22) Date of filing: 14.04.1998
(51) Int. Cl.: C07B 61/00, B01J 19/00

(54) **PROCESS FOR THE PREPARATION OF A CHEMICAL LIBRARY**
VERFAHREN ZUR HERSTELLUNG EINER CHEMISCHEN BIBLIOTHEK
PROCEDE SERVANT A PREPARER UNE BANQUE CHIMIQUE

(30) Priority: 17.04.1997 GB 9707741
(43) Date of publication of application: 02.02.2000
(73) Proprietor: Novo Nordisk A/S, 2880 Bagsværd (DK)
(72) Inventor: GARMAN, Andrew, John, Macclesfield, Cheshire SK10 4TG (GB); PEARS, David, Alan, The Heath, Runcorn M9 8ZS (GB)
(74) Representative: Inspicos A/S
(86) International application number: PCT/GB1998/001063
(87) International publication number: WO 1998/047838

(56) References cited:
- GB-A- 2 289 150
- GB-A- 2 306 484
- K. C. NICOLAOU: "Radiofrequency encoded combinatorial chemistry" ANGEWANDTE CHEMIE INTERNATIONAL EDITION., vol. 34, no. 20, 1995, pages 2289-2291, XP000535261 WEINHEIM DE cited in the application
- E. J. MORAN: "Radio frequency tag encoded combinatorial library method for the discovery of tripeptide-substituted cinnamic acid inhibitors of the protein tyrosine phosphatase PTB1B" JOURNAL OF THE AMERICAN CHEMICAL SOCIETY, vol. 117, no. 43, 1 November 1995, pages 10787-10788, XP002070500 DC US cited in the application

## Description

Chemical libraries are a powerful way of providing compounds for the identification of active compounds in pharmaceutical, agrochemical and related industries.

Chemical libraries may be assembled by a number of methods, including the 'combine/mix/divide', or split synthesis process described by Furka et al (Abstr. 14th Int. Congr. Biochem., Prague, Czechoslovakia, 1988, 5, 47; Int. J. Pept. Prot. Res, 1991, 37, 487-493) for creating libraries on polymer beads, in which each bead contains one discrete chemical species. The individual components of the library may be tested either still attached to the polymer bead on which they were synthesised (Lam et al, Nature, 1991, 354, 82-84) or after cleavage from the bead (Salmon et al, Proc. Nat. Acad. Sci. USA, 1993, 90, 11708-11712). If tested while attached to the bead, or cleaved but physically associated with the bead, it is necessary to devise a method of identifying the chemical which is bound to any bead found to be biologically active in the test. Where this compound is a polypeptide this may be achieved by Edman degradation, either directly or after cleavage from the bead (Lam et al, Bioorg. Med. Chem. Lett., 1993, 3, 419-424); oligo nucleotides may be identified by microsequencing techniques (Dower et al, Ann. Rep. Med. Chem., 1991, 26, 271-280). Other small molecules may be identified directly by electrospray, matrix-assisted laser desorption, or time-of-flight secondary ion mass spectrometry techniques (Brummel et al, Analyt. Chem., 1996, 68, 237-42).

Researchers have attempted to identify peptides containing unnatural amino acids, which are not amenable to Edman degradation, by co-synthesising a second peptide chain comprising natural amino acids and using this as a sequenceable 'code' (Nikolaiev et al, Peptide Research, 1993, 6, 161-170), and others have used oligonucleotide chains as 'codes' to identify the other ligands (Needels et al, Proc. Nat. Acad. Sci. USA, 1993, 90, 10700-10704), while mixtures of halogenated aromatic compounds have been used, incorporated in trace amounts at each stage of the synthesis, to form an identifiable (by gas chromatography) 'binary code' system for ligand definition (Borchardt and Still, J. Am. Chem. Soc., 1994, 116, 373-374). These methods have been reviewed extensively (Jacobs and Fodor, TIBTECH, 1994, 12, 19-26; Pavia et al (Eds), Bioorg. Med. Chem. Lett., 1993, 3, 381-470; Moos et al, Ann. Rep. Med. Chem., 1993, 28, 315-324; Gordon et al, J. Med. Chem., 1994, 37, 1233-1251, and 1386-1401; K. D. Janda, Proc. Natl. Acad. Sci. USA, 1994, 91, 10779-10785). An alternative to such chemical coding or tagging strategies has been the use of silicon chips in the form of radio frequency, or 'RF' tags, which, when associated with self-contained packets of polymer beads, can be used to store information about the chemical synthetic processes used to make a particular ligand, and hence by inference, the chemical structure of the resultant ligand (Moran et al, J. Am. Chem. Soc., 1995, 117, 10787-10788; Nicolaou et al, Angew. Chem. Int. Ed. Engl., 1995, 34, 2289-2291). A key advantage of this RF approach is that by using an essentially non-chemical tag, the risk of the vital stored information being affected, or at worst destroyed, by the chemical synthetic processes used to construct the ligand is considerably lessened. However, that risk of information corruption due to chemical or physical extremes is not zero. It is well-known in the microchip industry that certain types of otherwise convenient (e.g. EEPROM) silicon-based memory may not retain its data through all chemical processes, being potentially vulnerable to high temperatures and intense light levels.

WO 96/24061 discloses a peptide library linked on a particle containing a microchip.

It is clear that considerable effort has been applied to the compound identification problem, but that there are limitations or disadvantages with the prior art methods.

We have now found it is possible to characterise individual polymeric beads by reference to random features of the particles.

In a first aspect of the present invention we provide a method for the preparation of a chemical library, which method comprises synthesising the library on a plurality of polymeric beads comprising optically distinguishable random features in the form of microparticles incorporated into the bead, recording such features during library synthesis, so as to provide the chemical library on the plurality of polymeric beads and wherein the identity of library compound(s) associated with a polymeric bead is established by reference to the bead's random features.

By "random features" we mean disordered, physical features of the polymeric bead which arise during manufacture. It will be appreciated that the manufacturing process is adapted to apply random features to the polymeric beads. An optical characterisation system is used to categorise individual beads, beads are subsequently tracked according to the same characteristics.

In a set of polymeric beads, each bead will be distinct so that there is no ambiguity when identifying beads at the end of the procedure. It will be appreciated that when the beads are made distinctive by random procedures, there will be a finite chance of two or more identical structures arising by chance. This is acceptable provided that this ambiguity is not inconveniently frequent, this is what is refered to by "distinct".

By recording, we mean the capturing of sufficient information to define the bead. For convenience, we refer to the information as an image. This may be a literal image or a virtual image constructed from the data that is collected.

In a further aspect of the invention we disclose a chemical library provided on a plurality of polymeric beads comprising optically distinguishable random features in the form of microparticles incorporated into the bead, and wherein the identity of library compound(s) associated with a polymeric bead is established by reference to the bead's random features as recorded during library synthesis.

The chemical library is conveniently prepared by the split synthesis method (Furka et al (Abstr. 14th Int. Congr. Biochem., Prague, Czechoslovakia, 1988, 5, 47; Int. J. Pept. Prot. Res, 1991, 37, 487-493) and related procedures where different building blocks are added to a nascent compound at different synthesis stages. It is common in split synthesis procedures, not to mix the beads at the end of the synthesis. In this way information concerning the last building blocks to be added is retained. The method of the invention optionally incorporates this feature to aid identification of the beads of interest.

The invention includes methods where the distribution of beads is random or directed (for example using robotic apparatus), conveniently random.

In a further aspect of the invention we provide a chemical library synthesis system for use with polymeric beads comprising optically distinguishable random features in the form of microparticles incorporated into the bead, which system comprises chemical library synthesis apparatus coupled to image analysis apparatus such that during chemical library synthesis the image analysis apparatus can capture image(s) of chemical library polymeric beads comprising optically distinguishable random features in the form of microparticles incorporated into the bead and subsequently identify the beads by reference to their random features.

The coded polymeric beads of the invention are conveniently manipulated using robotic apparatus as disclosed in our co-pending UK patent application no. 9707743.2, filed 17th April 1997, the contents of which are incorporated herein by reference. Advantages of the use of manipulative robotic devices such as "pick-and-place" machines in combinatorial chemistry include: the ability to form an essentially complete library consisting of a single composite polymeric bead per chemistry either by selection from a larger stochastically formed set or by manipulation of beads at all stages; the ability to select a sub-library of controlled diversity for an initial screen which is designed to highlight the 'volumes of chemical space' in which compounds of interest are to be found, in particular the ability to decide not to select individual beads or sub-libraries of beads - followed by a subsequent selection of further sub-libraries surrounding the regions of interest, without further chemical synthesis processes being required. In this way, the technique significantly enhances the throughput of the overall drug discovery process.

The chemical library may be used in screening methods to identify compounds which modulate the activity of a biological of interest. Typically, a compound will be cleaved from its associated coded bead before testing; alternatively, compounds are tested whilst still attached to their beads. In both cases, there needs to be an association between the measured activity and the bead that gave rise to that activity. Once a bead of interest is identified, its bead code is retrieved, preferably in substantially the same way as was used to track the bead in the course of the synthesis. This code is then compared to the record of the movement of the beads made during the synthesis procedure, and the structure of the compound of interest is inferred. Using appropriate image analysis and computer algorithms, the location of the bead of interest at the various synthesis stages is determined.

Library compounds may be tested in a variety of assay systems. These include biochemical and in vitro assays. In general bead codes are read once the assay is complete and only beads associated with active compounds are identified and decoded. Alternatively library compounds are plated out and decoded before the assay takes place. Active compounds are then identified by reference to their position on the plate(s), for example by reference to plate number and well/locus number.

Convenient assay approaches include the following. The library may be stored in stock solutions (ie. compound is removed from the polymeric bead) for example in wells in microtitre plates. These solutions may be used for many different assays. When activity is detected in an assay, the location of the active compound is determined and the corresponding polymeric bead is retrieved and decoded. Alternatively the polymeric beads are distributed in a two-dimensional assay system, for example a high density array such as on a gel or in microwells. Compounds are removed from the beads. Any active compounds give rise to zones of activity. Such an approach is disclosed for example in our zone screening UK patent no. 2291708 (Zeneca Limited). Corresponding beads may be decoded, either in situ or by retrieval and transferral to a code reading station.

Conveniently, similar or identical image analysis apparatus is subsequently coupled to chemical library screening apparatus to provide an automated or semi-automated chemical library analysis system wherein synthesis particles comprising random features are identified during or after screening by reference to their images as captured by image analysis apparatus during library synthesis.

Polymeric beads for use in the invention are beads that exhibit features that allow them to be distinguished optically. Such features will typically result from the manufacturing procedures which, optionally, could be varied in such a way as to enhance the non-uniformity of the beads.

Preferably, the polymeric beads have features that are introduced during the preparation of the beads.

By "optically distinguishable features" we mean microparticles, the number and position of which makes each bead distinguishable from the others. By distinguishable we mean that the chances of two or more beads not being distinguishable one from the other is low and does not detract from the usefulness of the method.

By "introduced", we mean that these features are incorporated into the bead during manufacture at a convenient stage prior to their use in the method of the invention.

The beads are preferably spherical beads of polystrene or other polymeric material suitable for library synthesis. A convenient size is 100-300 micron but other sizes are possible depending on the number of compounds to be synthesised, scale, economics and other factors. The beads are derivatised for library synthesis using conventional techniques.

The optically distinguishable features are microparticles. The microparticles may be of any inert, opaque material that may be conveniently imaged. For example the material may be coloured, opaque or of markedly different refractive index to the material comprising the bulk of the bead. The microparticles may be for example in the range 0.5 to 40 micron in diameter. A convenient range would be 3 to 20 microns. The microparticles are incorporated into the bead for example by mixing them into the monomer solution, allowing the monomer to polymerise to beads under conventional conditions. The number of microparticles is adjusted to give the desired number of particles per bead. This may be determined emperically but is expected to be in the range 5 to 200 particles per bead. The optimum number will depend on the microparticle size, the bead size, the resolution of the imaging system, the number of beads in the library and other factors. The optimum number may be determined by routine methods.

By way of example the microparticle may be a preformed polymeric bead made by micro suspension polymerisation ideally having a diameter in the range 5-15 µm. Such micro beads may be incorporated into the primary bead matrix by suspending them in the aqueous polymerisation medium and then performing a standard suspension polymerisation with the additional monomer(s). A proportion of the micro beads will become encapsulated within the primary bead structure. There are a number of alternative process strategies that may be adopted. For example, it is preferable that the micro beads are chemically anchored into position within the primary bead matrix. This may be achieved by pre-swelling the micro beads either in aqueous suspension or other medium with monomer preferably containing a multifunctional unsaturated component (for example divinyl benzene). Suspension polymerisation of these monomer swollen micro beads with additional monomer(s) will then yiel micro beads linked through an IPN into the bead matrix. The encapsulated micro structures are conveniently distinguished by the use of coloured (dyed or pigmented) or fluorescent components.

The microparticles are conveniently constrained for image capture. This may be achieved for example by passing the particles through a conduit, such as a capillary, this immobilises the particles in two dimensions. The conduit is conveniently translucent and/or has a viewing window. Also, pulsed/stroboscopic lighting may be used to give the impression that a particle is stationary.

Imaging is effected using any convenient means. This is for example achievable using commercially available telescope or long range microscope devices. For example the Questar QM-100 instrument (Box C, New Hope, Pennsylvania 18938, USA) is able to resolve features of 1.1 µm with a field of view from 375µm to 8mm at a working range of 150mm. It offers a large aperture (c.87mm) which reduces the demands on the overall level of illumination required.

The pattern of microparticles will be random and appear for example like a constellation of stars. Like a constellation, the pattern appears very different depending on the viewing angle. Though it is possible (by bead design, for example by introducing an asicular magnetic particle into the bead it may be aligned to a magnetic field) to orientate the bead during imaging, it is more convenient to take an image at an arbitrary angle. Clearly, if the bead of interest identified after testing is also imaged at a random orientation, it will be difficult in many cases to identify the bead. Hence it is desirable to image the bead of interest from at least two, and up to six different angles, preferably three different angles, for example at or close to 90 degrees apart. The number of images to be taken may depend, in some cases to a large extent on the transparency of the bead. It will be appreciated that in this embodiment the orientation of the bead is not constant in all imaging steps. This means that a signature may be derived which does not depend on the orientation of the bead. This signature is a distance matrix. A consequence of multiple imaging is a reduction in the number of unique codes. This may be overcome by providing more microparticles to the synthesis beads or by reducing the size of each measured volume element or "voxel".

Having obtained an image, or set of images, of the bead techniques familiar to persons skilled in the art may be used to derive the positions of the microparticles within the bead and to define with certainty into which voxel each microparticle will fall. A list of the set of inter-microparticle distances is produced from this data and this is a determining characteristic of the bead. It will be apparent that if the bead is cubic, the familiar cartesian grid is an appropriate co-ordinate frame on which to base the set of distances. Whereas for a spherical bead, a set of spherical co-ordinates is appropriate. A particular advantage of the use of a spherical co-ordinate scheme is that the angular ordinates are not dependent on the bead diameter and thus any bead swelling during exposure to solvents is unlikely to interfere with the overall recognition process. The inter-microparticle distances are conveniently quantised as one of 256 different values. This being convenient for data storage. By way of example based on the measurement of distances between 10 microparticles per bead, 45 bytes of memory may be used to capture the data for each bead. For a 20,000 bead library this is a total of about 1 megabyte of memory. This is not a large data volume by current standards. By way of further example, extra bytes of memory are allocated to each bead to record its movement. Further convenient aspects of the data handling process will be apparent to the artisan of ordinary skill.

In a particular embodiment of the invention the polymeric beads are of diameter 100-300µm and contain between 5 and 200 (preferably between 5 and 25) dispersed microparticles for recognition purposes.

The information content may be increased by the use of beads that differ in size, shape, colour or other recognisable parameter. Furthermore the number of microparticles per bead may be varied. Conveniently this will be achieved by random incorporation of the microparticles during the manufacture of the bead. Alternatively, non-random incorporation may be used to broaden the distribution of number of microparticles per bead. Alternatively, the microparticles may be incorporated as surface features of the bead, rather than dispersed within the core of the bead.

It will be appreciated that beads may swell differently in different solvents. Hence it is desirable either to use the same solvent for the different imaging stages, or to make allowances for inter-particle spacings with the image analysis software.

The advantages of the method of the invention include the following:
1. Although the polymeric beads are different, the manufacturing process to make them is relatively simple and does not require the beads to be treated differently, i.e. the set of beads may be prepared in one manufacturing sequence.
2. The optically introduced features may be introduced to create a large set of beads which are distinguishable one from the other. This allows large compound libraries to be synthesised.
3. The polymeric beads may be imaged by conventional means.

The invention will now be illustrated but not limited by reference to the following Figures wherein:

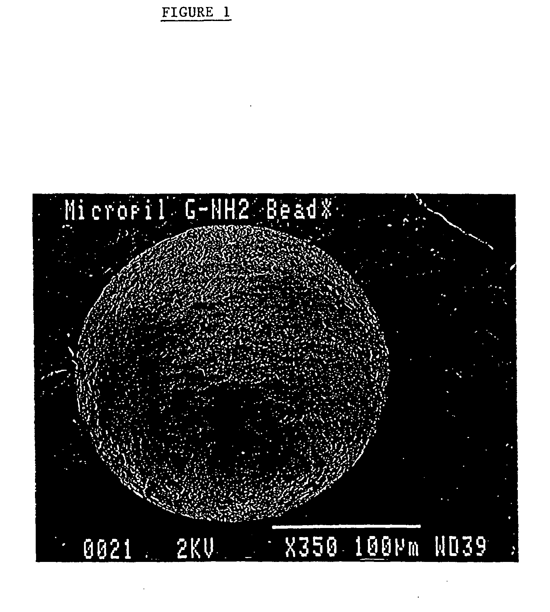

Figure 1 shows an electron microscope image of a Micropil G-NH2 bead.

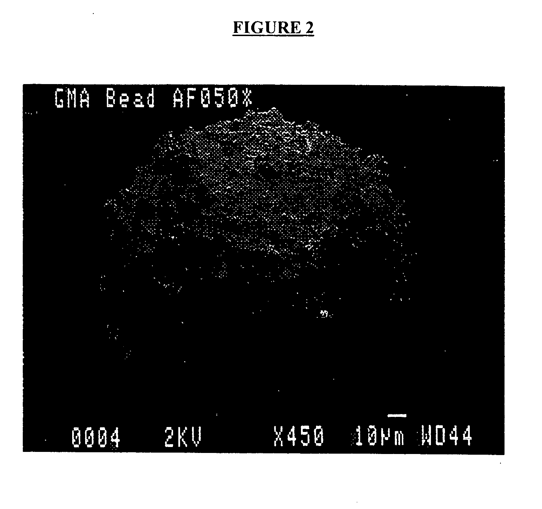

Figure 2 shows an electron microscope image of a GMA bead

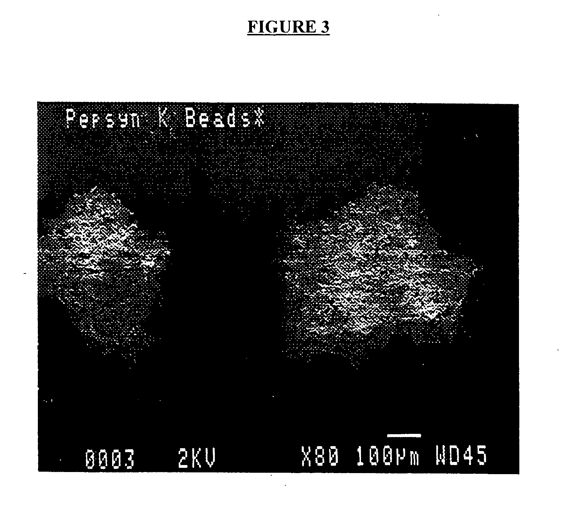

Figure 3 shows an electron microscope image of two Pepsyn K beads

## Claims

1. A method for the preparation of a chemical library, which method comprises synthesising the library on a plurality of polymeric beads comprising optically distinguishable random features in the form of microparticles incorporated into the bead, recording such features during library synthesis, so as to provide the chemical library on the plurality of polymeric beads wherein the identity of library compound(s) associated with a polymeric bead is established by reference to that bead's random features.

2. A method as claimed in claim 1 wherein the polymeric beads comprise glass material and grafted or bonded polymeric material.

3. A method as claimed in claim 1 wherein the polymeric beads comprise ceramic material and grafted or bonded polymeric material.

4. A chemical library on a plurality of polymeric beads comprising optically distinguishable random features in the form of microparticles incorporated into the bead prepared according to the process of any preceeding claim.

5. A chemical library synthesis system which comprises chemical library synthesis apparatus coupled to an image analysis apparatus such that during chemical library synthesis the image analysis apparatus captures image(s) of chemical library polymeric beads comprising optically distinguishable random features in the form of microparticles incorporated into the bead and subsequently identifies the beads by reference to their random features.

6. A synthesis system as claimed in claim 5 wherein the synthesis particles are constrained for image capture.

7. A synthesis system as claimed in claim 5 or claim 6 wherein the individual polymeric bead images are not dependent on the orientation of the beads.

8. The use of a chemical library as claimed in claim 4 in screening methods to identify compounds which modulate the activity of a biological of interest.

9. The use of robotic pick and place apparatus to manipulate polymeric beads comprising optically distinguishable random features in the form of microparticles incorporated into the bead.

## Patentansprüche

1. Verfahren zur Herstellung einer chemischen Bibliothek, wobei das Verfahren das Synthetisieren der Bibliothek auf mehreren Polymerkügelchen, die optisch unterscheidbare willkürliche Merkmale in Form von Mikropartikeln umfassen, welche in das Kügelchen eingearbeitet sind, das Aufzeichnen derartiger Merkmale während der Bibliothekssynthese zur Bereitstellung einer chemischen Bibliothek auf mehreren Polymerkügelchen umfasst, wobei die Identität einer Bibliotheksverbindung bzw. Bibliotheksverbindungen, die mit einem Polymerkügelchen verbunden ist, durch Verweis auf die willkürlichen Merkmale dieses Kügelchens nachgewiesen wird.

2. Verfahren nach Anspruch 1, wobei die Polymerkügelchen Glasmaterial und gepfropftes oder gebundenes Polymermaterial umfassen.

3. Verfahren nach Anspruch 1, wobei die Polymerkügelchen Keramikmaterial und gepfropftes oder gebundenes Polymermaterial umfassen.

4. Chemische Bibliothek auf mehreren Polymerkügelchen, die optisch unterscheidbare willkürliche Merkmale in Form von Mikropartikeln umfassen, welche in das Kügelchen eingearbeitet sind, hergestellt gemäß dem Verfahren nach einem der vorhergehenden Ansprüche.

5. System zur Synthese einer chemischen Bibliothek, das eine Vorrichtung zur Synthese einer chemischen Bibliothek umfasst, die derart mit einer Bildanalysevorrichtung verbunden ist, dass die Bildanalysevorrichtung während der Synthese einer chemischen Bibliothek ein Bild bzw. Bilder der Polymerkügelchen der chemischen Bibliothek, die optisch unterscheidbare willkürliche Merkmale in Form von Mikropartikeln umfassen, welche in das Kügelchen eingearbeitet sind, erfasst und die Kügelchen anschließend durch Verweis auf die willkürlichen Merkmale identifiziert.

6. Synthesesystem nach Anspruch 5, wobei die Synthesepartikel für die Bilderfassung eingespannt sind.

7. Synthesesystem nach Anspruch 5 oder Anspruch 6, wobei die einzelnen Bilder der Polymerkügelchen von der Ausrichtung der Kügelchen unabhängig sind.

8. Verwendung einer chemischen Bibliothek nach Anspruch 4 in Screening-Verfahren zur Identifizierung von Verbindungen, die die Aktivität eines fraglichen Biologikums modulieren.

9. Verwendung einer automatischen Bestückungsvorrichtung zur Handhabung von Polymerkügelchen, die optisch unterscheidbare willkürliche Merkmale in Form von Mikropartikeln umfassen, welche in das Kügelchen eingearbeitet sind.

## Revendications

1. Un procédé de préparation d'une chimiothèque, ledit procédé comprenant la synthèse de la chimiothèque sur une pluralité de billes de polymère comportant des caractéristiques aléatoires optiquement discernables sous forme de microparticules incorporées dans la bille, en enregistrant ces caractéristiques pendant la synthèse de la chimiothèque, de manière à produire la chimiothèque sur la pluralité des billes de polymère, dans lequel l'identité du ou des composés de la chimiothèque associés à une bille de polymère est établie en se référant aux caractéristiques aléatoires de cette bille.

2. Un procédé tel que décrit dans la revendication 1 dans lequel les billes de polymère comprennent un matériau de verre et un matériau polymère greffé ou lié.

3. Un procédé tel que décrit dans la revendication 1 dans lequel les billes de polymère comprennent un matériau céramique et un matériau polymère greffé ou lié.

4. Une chimiothèque sur une pluralité de billes de polymère comportant des caractéristiques aléatoires optiquement discernables sous forme de microparticules incorporées dans la bille, préparées selon le procédé de l'une quelconque des revendications précédentes.

5. Un système de synthèse de chimiothèques qui comprend un appareil de synthèse de chimiothèques associé à un appareil d'analyse d'images tel que, pendant la synthèse de la chimiothèque, l'appareil d'analyse d'images capture une ou plusieurs images des billes de polymère de la chimiothèque comportant des caractéristiques aléatoires optiquement discernables sous forme de microparticules incorporées dans la bille et identifie ensuite les billes en se référant à leurs caractéristiques aléatoires.

6. Un système de synthèse tel que décrit dans la revendication 5 dans lequel les particules de synthèse sont conditionnées pour la capture d'images.

7. Un système de synthèse tel que décrit dans la revendication 5 ou la revendication 6 dans lequel les images des différentes billes de polymère ne dépendent pas de l'orientation des billes.

8. L'utilisation d'une chimiothèque telle que décrite dans la revendication 4 dans des procédés de criblage pour identifier des composés qui modulent l'activité d'une substance biologique présentant de l'intérêt.

9. L'utilisation d'un appareil de transfert robotisé pour manipuler des billes de polymère comportant des caractéristiques aléatoires optiquement discernables sous forme de microparticules incorporées dans la bille.
